(19)

**Europäisches Patentamt**
**European Patent Office**
**Office européen des brevets**

(11) **EP 2 045 863 A1**

(12) **EUROPEAN PATENT APPLICATION**

(43) Date of publication:
**08.04.2009 Bulletin 2009/15**

(51) Int Cl.:
**H01M 8/04** *(2006.01)*     **H01M 8/10** *(2006.01)*

(21) Application number: **07117945.1**

(22) Date of filing: **05.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Atomic Energy Council - Institute of Nuclear**
**Energy Research**
**Longtan Township**
**Taoyuan County, Taiwan (TW)**

(72) Inventors:
• **Chen, Charn-Ying**
**Longtan Township**
**Taoyuan County (TW)**
• **Chang, Chun-Lung**
**Longtan Township**
**Taoyuan County (TW)**

• **Liou, Der-Hsing**
**Longtan Township**
**Taoyuan County (TW)**
• **Hsu, Chih-Yuan**
**Longtan Township**
**Taoyuan County (TW)**
• **Cha, Hou-Chin**
**Longtan Township**
**Taoyuan County (TW)**

(74) Representative: **von Kreisler Selting Werner**
**Patentanwälte**
**Deichmannhaus am Dom**
**Bahnhofsvorplatz 1**
**50667 Köln (DE)**

Remarks:
Amended claims in accordance with Rule 137(2) EPC.

(54) **Method for supplying fuel to fuel cell**

(57)     The present invention provides a method for supplying fuel to a fuel cell, which comprises steps of: (a) feeding a specific amount of a fuel into a fuel cell system; (b) determining a specific monitoring period according to a characteristic value measured from the fuel cell when subjected to a load; (c) detecting if the load is varying during the specific monitoring period ; and (d) selecting to proceed to the step (a) or (b) according the variation of the load. In one embodiment, the method further comprises a step (e) determining, if the load is not changed, whether the specific amount of fuel is enough to judge the timing for supplying the fuel. By the aforesaid method, the supplying of fuel to the fuel cell under dynamic load can be effectively controlled for optimizing the performance of the fuel cell without the use of fuel concentration sensor.

FIG. 5

EP 2 045 863 A1

## Description

## FIELD OF THE INVENTION

The present invention relates to a method for supplying fuel to fuel cell, and more particularly, to a fuel supplying method capable of measuring a characteristic value of a fuel cell when the fuel cell is subjected to a load while basing on the measurement to determine whether the load is varying and how it is varying if so, and thus effectively controlling the timing for supplying fuel to the fuel cell for optimizing the performance of the fuel cell.

## BACKGROUND OF THE INVENTION

A fuel cell is an electrochemical energy conversion device, similar to a battery in that it provides continuous DC power, which converts the chemical energy from a fuel directly into electricity and heat. For example, one type of fuel cell includes a proton exchange membrane (PEM), often called a polymer electrolyte membrane, that permits only protons to pass from anode to cathode of the fuel cell. At the anode, diatomic hydrogen (a fuel) is reacted to produce protons that pass through the PEM. The electrons produced by this reaction travel through circuitry that is external to the fuel cell to form an electrical current. At the cathode, oxygen is reduced and reacts with the protons to form water. When operated directly on hydrogen, the fuel cell produces this energy with clean water as the only by-product. Unlike a battery, which is limited to the stored energy within, a fuel cell is capable of generating power as long as fuel is supplied continuously. Although hydrogen is the primary fuel source for fuel cells, the process of fuel reforming allows for the extraction of hydrogen from more widely available fuels such as natural gas and propane or any other hydrogen containing fuel. For a growing number of power generators and users, fuel cells are the key to the future since it is an environment-friendly power source with high energy conversion efficiency.

Among the fuel cells, a direct methanol fuel cell or so called DMFC is a promising candidate for portable applications in recently years. The difference between DMFC and other power generating devices, such as PEMFC, is that the DMFC takes methanol as fuel in substitution for hydrogen. Because of utilizing liquid methanol as fuel for reaction, the DMFC eliminates the on board $H_2$ storage problem so that the risk of explosion in the use of fuel cells is avoided, which substantially enhances the convenience and safety of fuel cells and makes DMFC more adaptable to portable electronic appliances such as Laptop, PDA, GPS and etc, in the future.

During the electrochemical reaction occurred in the fuel cell, the fuel concentration is a vital parameter affecting the performance of the liquid feed fuel cell system. However, DMFC suffers from a problem that is well known to those skilled in the art: methanol cross-over from anode to cathode through the membrane of electrolyte, which causes significant loss in efficiency. It is important to regulate the supplying of fuel appropriately to keep methanol concentration in a predetermined range whereby DMFCs system can operate optimally. For example, a fuel sensor, such as methanol concentration sensor disclosed in the prior art, is utilized to detect the concentration of methanol so as to provide information for controlling system to judge a suitable timing to supply methanol. Although the foregoing method is capable of controlling the concentration of the fuel, it still has the drawbacks of increasing the complexity and cost of the fuel cells system. And a lot of experimental effort like calibration is necessary through the use of concentration sensor.

In order to reduce the cost and complexity caused by the additional concentration sensor in the prior arts, a couple of fuel sensor-less control for DMFCs approaches have been disclosed to decrease the cost and complexity of the fuel cells system and improve the stability of fuel cell operation by monitoring one or more of the fuel cells' operating characteristics. For instance, in US patent 6,698,278, the way to control the concentration of methanol is to calculate methanol concentration in the fuel stream based on the measurement of the temperature of the fuel stream entering the fuel cell stack, the fuel cell stack operating temperature, and the load current. However, the foregoing disclosing method are based on the predetermined calibration of the fuel cells system and on empirical models. The monitoring and control of the methanol concentration are loose due to the complexity of fuel cells operation and MEA degradation. Moreover, a prior art, disclosed in US patent 6,991,865, provides a method to optimize the concentration of methanol by detecting the short circuit current or open circuit potential. However, since periodically short circuit to detect the current is necessary, it is easily to damage the fuel cells itself so as to affect the stability and lifespan of the fuel cells system.

According to the drawbacks of the prior arts described above, it deserves to provide a method for supplying fuel to fuel cells to solve the problem of the prior arts.

## SUMMARY OF THE INVENTION

The primary object of the present invention is to provide a fuel supplying method, capable of regulating fuel concentration and changing fuel supply of a fuel cell according to a loading current measured from the fuel cell for enabling the fuel cell to generate power in respond to the variation of the load and thus optimize the performance of the fuel cell.

It is another object of the invention to provide a method for supplying fuel to fuel cell, capable of using a characteristic value measured from a fuel cell when the fuel cell is subjected to a load to determine whether the load is varying.

It is further another object of the invention to provide a method for supplying fuel to fuel cell, which perform a numerical operation/comparison upon a characteristic value such as voltage, current or power, measured from a fuel cell when the fuel cell is subjected to a load for using the result of the numerical operation/comparison to effectively control the fuel supply of the fuel cell with the use of fuel concentration sensor, and thereby, not only the performance of the fuel cell is optimized, but also the manufacturing cost of the fuel cell is reduced.

To achieve the above objects, the present invention provides a method for supplying fuel to a fuel cell, which comprises steps of: (a) feeding a specific amount of a fuel into the mixing tank of a fuel cell system; (b) determining a specific monitoring period according to a characteristic value measured from the fuel cell when subjected to a load; (c) detecting if the load is varying during the specific monitoring period; and (d) selecting to proceed to the step (a) or (b) according the variation of the load.

Preferably, the characteristic value can be selected from the group consisting of current measured from the fuel cell, voltage measured from the fuel cell, power measured from the fuel cell, and the combination thereof.

Preferably, the load is considered to be varying when the variation of a characteristic value exceeds a predetermined threshold value at any time during the specific monitoring period; and the characteristic value can be selected from the group consisting of current measured from the fuel cell, voltage measured from the fuel cell, power measured from the fuel cell, and the combination thereof.

Preferably, the selecting step of step (d) further comprises the steps of: (d1) proceeding back to step (a) when the load is increased; and (d2) proceeding back to step (b) when the load is decreased; wherein the load is determined to be increases when the characteristic value changes from low to high; and the load is determined to be decreases when the characteristic value changes from high to low. Furthermore, the characteristic value changes from low to high when a slope obtained from a curve profiling the variation of the characteristic value is a positive value; and the characteristic value changes from high to low when the slope obtained from the curve profiling the variation of the characteristic value is a negative value. Similarly, the characteristic value can be selected from the group consisting of current measured from the fuel cell, voltage measured from the fuel cell, power measured from the fuel cell, and the combination thereof. In addition, the changing of the characteristic value from high to low or from low to high can be determined by evaluating whether the difference of characteristic values measured before a specific point of time and after specific point of time is positive or negative. Accordingly, in another exemplary embodiment of the invention, another method for supplying fuel to a fuel cell is provided, which comprises steps of: (a) feeding a specific amount of a fuel into a fuel cell; (b) determining a specific monitoring period according to a characteristic value measured from the fuel cell when subjected to a load; (c) detecting if the load is varying during the specific monitoring period; (d) selecting to proceed to the step (a) or (b) if the load is changed ; and (e) determining, if the load is not changed, whether the specific amount of fuel is enough.

Preferably, the fuel sufficiency determination of step (e) further comprises the steps of: (e1) obtaining a first characteristic value of the fuel cell before the end of the specific monitoring period; (e2) obtaining a second characteristic value of the fuel cell at the end of the specific monitoring period; (e3) making an evaluation to determine whether the second characteristic value is small than the first characteristic value; and if smaller, the flow proceeds back to step (a) for injecting the specific amount of a fuel into the fuel cell; (e4) obtaining a third characteristic value of the fuel cell before a specific point of time after the end of the specific monitoring period when the second characteristic value is larger than the first characteristic value; (e5) obtaining a fourth characteristic value of the fuel cell at the specific point of time; (e6) making an evaluation to determine whether the variation of the characteristic value exceeds a threshold value; and if so, the flow proceeds back to step (d); (e7) making an evaluation to determine whether the fourth characteristic value is small than the third characteristic value when the variation of the characteristic value do not exceed the threshold value; and if the fourth characteristic value is small than the third characteristic value, the flow proceeds back to step (a) for injecting the specific amount of a fuel into the fuel cell; and (e8) proceeding back to step (e4) when fourth characteristic value is larger than the third characteristic value.

Preferably, the first characteristic value can be selected from the group consisting of the minimum voltage measured during the specific monitoring period , the minimum current measured during the specific monitoring period, the minimum power measured during the specific monitoring period, and the combination thereof. In another exemplary embodiment, the first characteristic value can be selected from the group consisting of an average of characteristic values associated with a time zone in the specific monitoring period, a root mean square (RMS) of the characteristic values associated with a time zone in the specific monitoring period; and statistic values calculated by performing other mathematical operations upon characteristic values associated with a time zone before the specific point of time, whichever capable of enabling the first characteristic value to associated with the second characteristic value so as to plot a curve profiling the characteristic value of the fuel cell.

Preferably, the third characteristic value can be selected from the group consisting of an average of characteristic values associated with a time zone before the specific point of time, a root mean square (RMS) of the characteristic values associated with a time zone before the specific point of time; and statistic values calculated by performing other mathematical operations upon characteristic values associated with a time zone before the specific point of time.

In an exemplary embodiment of the invention, the fuel sufficiency determination of step (e) further comprises the steps of: (e1) obtaining a first slope from a curve profiling characteristic value of the fuel cell at the end of the specific monitoring period; (e2) proceeding back to step (a) for injecting the specific amount of fuel into the fuel cell when the first slope is a negative value; (e3) obtaining a second slope from the curve profiling characteristic value of the fuel cell before a specific point time after the end of the specific monitoring period when the first slope is a positive value; (e4) making an evaluation to determine whether the variation of the characteristic value exceeds a threshold value; and if so, the flow proceeds back to step (d); (e5) determining whether the second slope is a negative value when the characteristic value does not exceed the threshold value; and if so, the flow proceeds back to step (a) for injecting the specific amount of a fuel into the fuel cell; and (e6) proceeding back to step (e3) when the second slope is a positive value.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

**BRIEF DESCRIPTION OF THE DRAWINGS**

The present invention will become more fully understood from the detailed description given herein below and the accompanying drawings which are given by way of illustration only, and thus are not limitative of the present invention and wherein:

FIG. 1 is a flow chart depicting steps of a method for supplying fuel to a fuel cell according to a first embodiment of the invention.

FIG. 2 plots the polarization curve of a fuel cell operating at optimum condition.

FIG. 3 is a schematic view of a fuel cell system.

FIG. 4A plots a current curve of a fuel cell as the fuel cell is subjecting to an increasing load.

FIG. 4B plots a current curve of a fuel cell as the fuel cell is subjecting to a decreasing load.

FIG. 5 is a flow chart depicting steps of a method for supplying fuel to a fuel cell according to a second embodiment of the invention.

FIG. 6A plots a current curve of a fuel cell operating under the fuel supplying method of the invention.

FIG. 6B plots a power curve of a fuel cell operating under the fuel supplying method of the invention.

FIG. 7 is a flow chart depicting steps of a method for supplying fuel to a fuel cell according to a third embodiment of the invention.

FIG. 8 is a diagram showing the relationship between the load and power of a fuel cell operating under the fuel supplying method of the second embodiment of the invention.

**DESCRIPTION OF THE EXEMPLARY EMBODIMENTS**

For your esteemed members of reviewing committee to further understand and recognize the fulfilled functions and structural characteristics of the invention, several exemplary embodiments cooperating with detailed description are presented as the follows.

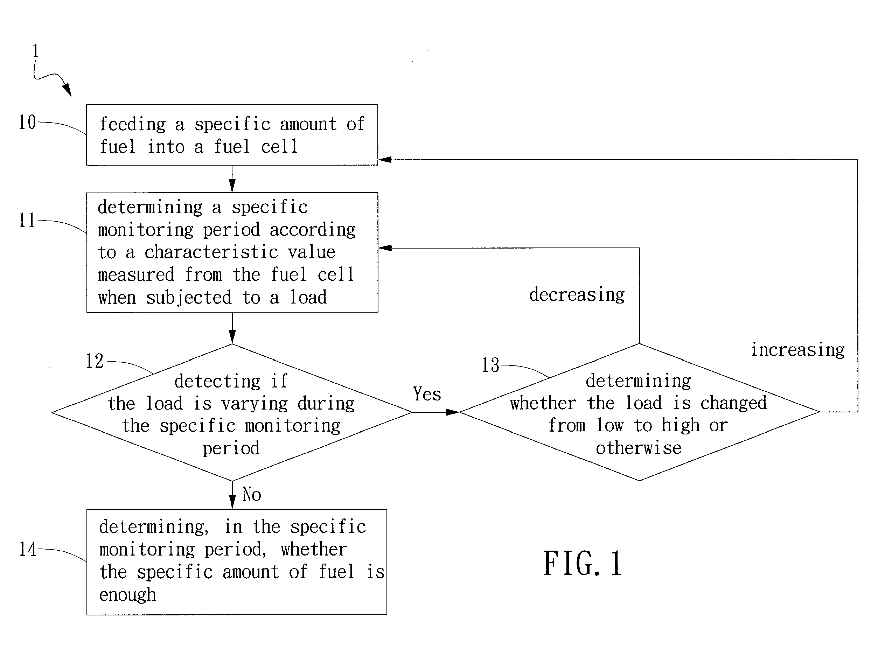

Please refer to FIG. 1, which is a flow chart depicting steps of a method for supplying fuel to a fuel cell according to a first embodiment of the invention. The flow starts from step 10. At step 10, a specific amount of a fuel is fed into a fuel cell, and then the flow proceeds to step 11. Preferably, the fuel is a hydrogen-rich fuel suitable for the fuel cell. For instance, the hydrogen-rich fuel for polymer electrolyte fuel cell (PEFC) should be a material selected from the group consisting of methanol, ethanol, and boron hydride. In addition, the hydrogen-rich fuel is not limited to be liquid as hydrogen can be used as fuel for proton membrane fuel cell (PEMFC) for instance. That is, the fuel used in the invention can be any fuel only if it is suitable for fuel cells. As in this embodiment the direct methanol fuel cell (DMFC) is used for illustration, methanol is used as the fuel in this embodiment. At step 11, a specific monitoring period is determined according to a characteristic value measured from the fuel cell when subjected to a load, and then the flow proceeds to step 12. It is noted that the characteristic value can be current measured from the fuel cell, voltage measured from the fuel cell, power measured from the fuel cell, and the combination thereof.

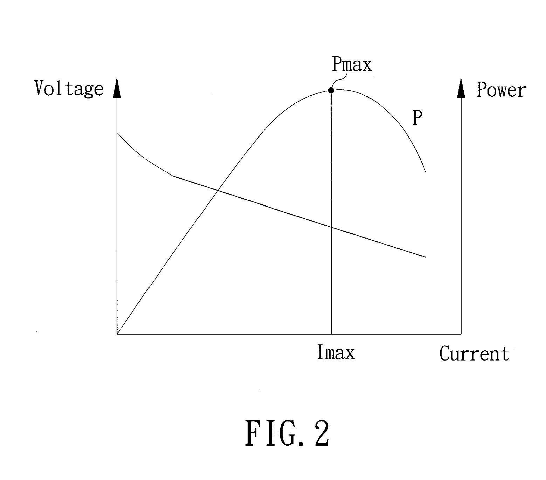

For detailing the determination of the specific monitoring period, please refer to FIG. 2 which plots the polarization curve of a fuel cell operating at optimum condition. The polarization curve of FIG. 2 shows a plot of cell voltage *vs*. current and a plot of cell power *vs*. current. As shown in FIG. 2, the power curve having a maximum power $P_{max}$ and the corresponding $I_{max}$ is a suggested value for deciding the minimum duration for the specific monitoring period. The system control unit of the fuel cell determines the specific monitoring period, at any constant discharging condition, inversely proportional to $I_{max}$. The minimum specific monitoring period is the duration that the fuel cell can sustain the load $I_{max}$ within the injection of the specific amount of fuel.

Therefore, as soon as the characteristic value is measured from the fuel cell when subjected to a load while defining the characteristic value to be current of the fuel cell for illustration, the characteristic value is compared with the maximum current $I_{max}$ for obtaining a ratio therefrom and then the duration of the specific monitoring period can be adjusted accordingly. For instance, when the specific monitoring period at $I_{max}$ of 5A is predetermined through experiment to be one minute and the characteristic value detected from the step 11 of the first embodiment is 1A, by proportion, the specific monitoring period will be determined to be 5 minutes in step 11.

At step 12, during the specific monitoring period, the load is detected to determine whether it is varying, if so, then the flow proceeds to step 13 for further evaluation; otherwise, the flow proceeds to step 14 for determining, in the specific monitoring period, whether the specific amount of fuel is enough. Preferably, the load is considered to be varying when the variation of a characteristic value exceeds a predetermined threshold value at any time during the specific monitoring period; and the characteristic value can be selected from the group consisting of current measured from the fuel cell, voltage measured from the fuel cell, power measured from the fuel cell, and the combination thereof.

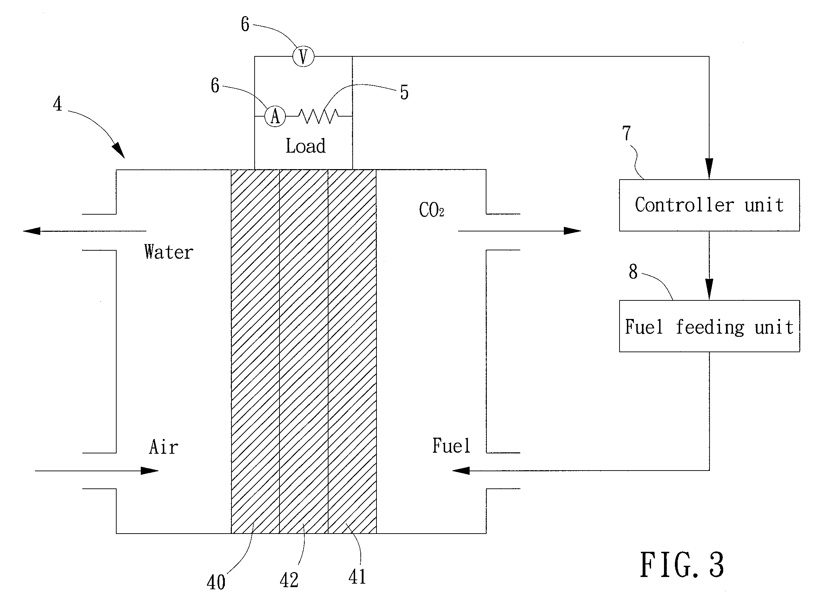

For clarifying the flow proceeding from step 11 to step 13, a fuel cell is used for illustration as that shown in FIG. 3. The fuel cell 4 of FIG. 3, connecting to a piping for feeding methanol and air and for exhausting water and carbon dioxide, is comprised of: an anode 41, a cathode 40 and a proton exchange membrane 42. As shown in FIG. 3, a load 5 is provided for connecting the anode 41 with the cathode 40, and thereby, a circuit connecting the anode 41, the load 5 and the cathode 40 is achieved. In addition, the load 5 is connected to measurement devices 6, which can be a voltmeter or galvanometer. In this embodiment, when a galvanometer is used as the measurement device, it is serially connected with the load 5; and when a voltmeter is used, it is parallel-connected with the load 5. By the signals received from the measurement device 6, a controller unit 7 of the fuel cell 4 can control a fuel feed unit 8 for supplying fuel to the fuel cell 4.

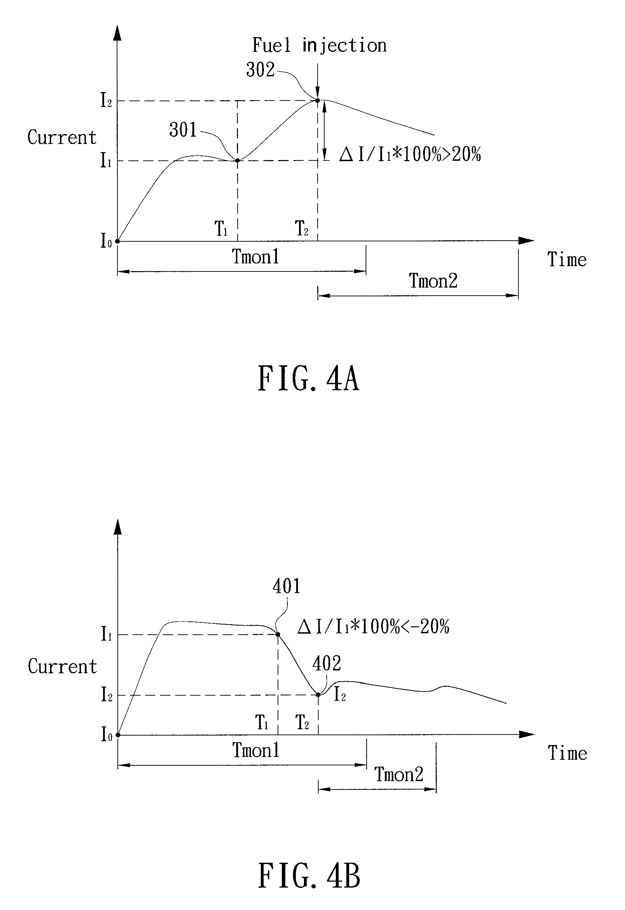

The determination in step 12 about whether the load is varying is made according to an evaluation about whether the variation of a characteristic value exceeds a predetermined threshold value. Please refer to FIG. 4A and FIG. 4B, which plot a current curve of a fuel cell as the fuel cell is subjecting to an increasing load, and that subjecting to a decreasing load. In FIG. 4A, the fuel is injected into the fuel cell system at $T_0$ for enabling the fuel cell 4 to converts the chemical energy from a fuel directly into electricity and thus discharging current to the load 5. Thereafter, the controller unit 7 of the fuel cell 4 will determine a specific monitoring period $T_{monl}$ according to a characteristic value of the fuel cell 4, i.e. the current measured from the fuel cell 4. As the controller unit 7 is programmed to analyze the valuation of the characteristic value periodically, the current $I_1$ measured at $T_1$, which is the point 301 in the current curve of FIG. 4A, is compared with the current $I_2$ measured at $T_2$, which is the point 302 in the current curve of FIG. 4A; and if the

variation, i.e. $\Delta I / I_1$, exceeds a predetermined threshold value, the load is determined to be varying. In this embodiment, the threshold value is defined to be 20%, and the interval between $T_1$ and $T_2$ is specified to be less than one second, which can be as small as one microsecond but is not limit thereby. The interval and the threshold value can be defined at will by operators as required. The threshold value is used for detection purpose as well as for adapting the fuel cell under dynamic load while filtering out noises and errors.

When the variation exceeds the threshold value, the step 13 of FIG. 1 will be proceeds. At step 13, an evaluation is made for determining whether the load is changed from low to high or otherwise; if increasing, the flow proceeds to step 10; if decreasing, the flow proceeds to step 11. Preferably, the load is determined to be increases when the characteristic value changes from low to high; and the load is determined to be decreases when the characteristic value changes from high to low. Furthermore, the characteristic value changes from low to high when a slope obtained from a curve profiling the variation of the characteristic value is a positive value; and the characteristic value changes from high to low when the slope obtained from the curve profiling the variation of the characteristic value is a negative value. In addition, the changing of the characteristic value from high to low or from low to high can be determined by evaluating whether the difference of characteristic values measured before a specific point of time and after specific point of time is positive or negative. Take the embodiment shown in FIG. 4A for example. At $T_2$, the step 10 is proceeded for injecting the specific amount of fuel into the fuel cell since $I_2$ is larger than $I_1$, and then another specific monitoring period $T_{mon2}$ is set. Nevertheless, in FIG. 4B, although the variation between the current $I_1$ measured at $T_1$, which is the point 401 in the current curve of FIG. 4B, and the current $I_2$ measured at $T_2$, which is the point 402 in the current curve of FIG. 4B, i.e. $\Delta I / I_1$, also exceeds a predetermined threshold value, but since $I_2$ is smaller than $I_1$ that represent the load is decreasing and thus the fuel existing in the fuel cell is determined to be sufficient, no fuel will be injected into the fuel cell system at $T_2$, and instead step 11 is proceeded so as to establish another specific monitoring period $T_{mon2}$ according to the current measured.

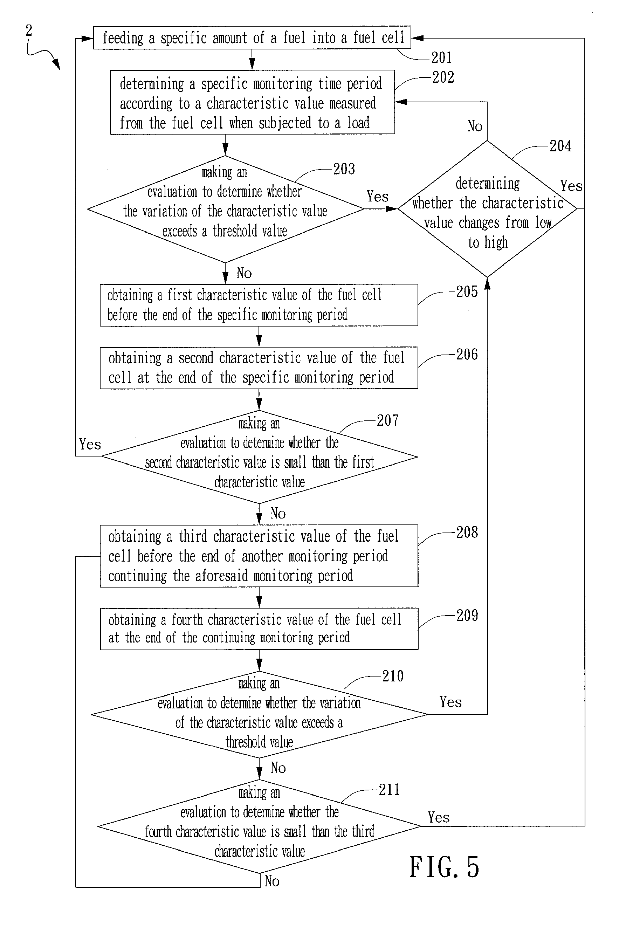

Please refer to FIG. 5, which is a flow chart depicting steps of a method for supplying fuel to a fuel cell according to a second embodiment of the invention. The flow starts from step 201. At step 201, a specific amount of a fuel is fed into a fuel cell, and then the flow proceeds to step 202. Preferably, the fuel is a hydrogen-rich fuel, such as methanol, ethanol, or boron hydride, etc. In addition, the hydrogen-rich fuel is not limited to be liquid as hydrogen can be used as the fuel. Moreover, the fuel cell in this embodiment is structured similar to that shown in FIG. 3 and thus is not described further herein.

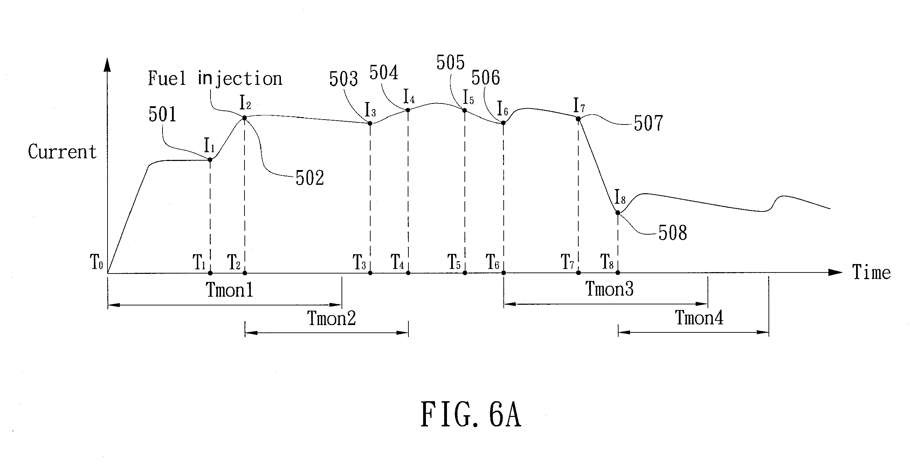

Please refer to FIG. 6A, which plots a current curve of a fuel cell operating under the fuel supplying method of the invention. In FIG. 6A, the characteristic value is defined to be current of the fuel cell for illustration. At step 202, a specific monitoring period $T_{mon1}$ is determined according to a characteristic value measured from the fuel cell system when subjected to a load; and then the flow proceeds to step 203. At step 203, an evaluation is made to determine whether the variation of the characteristic value exceeds a threshold value. It is noted that the characteristic value is selected from the group consisting of current measured from the fuel cell, voltage measured from the fuel cell, power measured from the fuel cell, and the combination thereof; and the process of determining the specific monitoring period $T_{mon1}$ is similar to that described hereinbefore and thus is not described further.

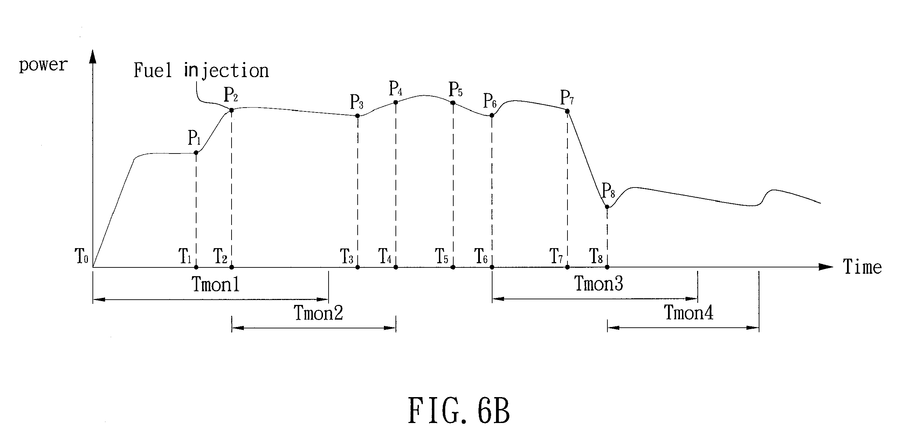

In step 203, the threshold value is defined to be 20%, that is, if the characteristic value difference exceed the former characteristic value, it is considered that the threshold value is exceeded; if so, then the flow proceeds to step 204; otherwise, the flow proceeds to step 205. It is noted that the threshold value is defined dependent upon actual requirement and experience that is not limited by the aforesaid 20%. Take the embodiment shown in FIG. 6A for example, the current $I_2$ measured at $T_2$, which is the point 502 in the current curve of FIG. 6B, is larger than the current $I_1$ measured at $T_1$, which is the point 501 in the current curve of FIG. 6B, and the difference between the two currents exceeds 20% $I_1$, therefore, the step 204 is executed for determining whether the characteristic value changes from low to high, and if decreasing, the flow proceeds to step 201 otherwise, the flow proceeds to step 202. In step 204, the characteristic value is decreasing or increasing is evaluated by determining whether the difference between $I_1$ and $I_2$ is a positive or negative value, or by determining whether a slope obtained from a curve linking the point 501 and the point 502 is positive or negative. It is noted that the time interval between the two points 501 and 502, i.e. ($T_2$ - $T_1$), can be varied according to actual load..

In FIG. 6A, the step 201 is proceeded for injecting the specific amount of fuel into the fuel cell system since $I_2$ is larger than $I_1$, and then another specific monitoring period $T_{mon2}$ is set in step 202. Nevertheless, if during the duration of the specific monitoring period $T_{mon2}$, the variation of the characteristic value does not exceed the threshold value, the flow will proceeds to a process for determining whether the remaining fuel in the fuel cell is sufficient.

The process for determining whether the remaining fuel is sufficient starts from step 205. At step 205, a first characteristic value of the fuel cell is obtained during the duration of the specific monitoring period $T_{mon2}$; and then the flow proceeds to step 206. The first characteristic value is a value selected from the group consisting of the minimum voltage measured during the specific monitoring period, the minimum current measured during the specific monitoring period, the minimum power measured during the specific monitoring period, and the combination thereof. In this exemplary embodiment, the first characteristic value can be current or power measured from the fuel cell, in which power is the product of current and voltage. Please refer to FIG. 6B, which plots a power curve of a fuel cell operating under the fuel supplying method of the invention. Generally, the performance of a fuel cell in the laboratory may be experimentally evaluated under constant voltage, constant current, or constant resistance modes with an electronic load. For instance, when a fuel cell is used as the power supply of notebook computers, it is likely that the system is performing under constant resistance mode so that the power curve and the voltage curve basically are conforming to the current curve as the one shown in FIG. 6A. As shown in FIG. 6B, because the power output of the fuel cell is given by the product of voltage and current, the use of power as the characteristic value of the fuel cell can enhance control resolution and accuracy. However, in reality, the fuel cell is not limited to operate under constant current mode or constant voltage mode. In the embodiment shown in FIG. 6A, the first characteristic value is defined to be the minimum power measured during the specific monitoring period, which is substantially the current $I_3$ measured at point 503. In addition, the first characteristic value can be selected from the group consisting of an average of characteristic values associated with a time zone in the specific monitoring period, a root mean square (RMS) of the characteristic values associated with a time zone in the specific monitoring period; and statistic values calculated by performing other mathematical operations upon characteristic values associated with a time zone before the specific point of time, and so on.

At step 206, a second characteristic value of the fuel cell is obtained at the end of the specific monitoring period; and then the flow proceeds to step 207. It is noted that the second characteristic value can be selected from the group consisting of current measured from the fuel cell, voltage measured from the fuel cell, power measured from the fuel cell, and the combination thereof. In the embodiment shown in FIG. 6A, the second characteristic value is defined as the power, which is substantially the power $P_4$ measured at point 504. At step 207, an evaluation is made to determine whether the second characteristic value is small than the first characteristic value; if so, then the flow proceeds back to step 201 for injecting fuel into the fuel cell system again as the fuel had been exhausted to a certain extent; otherwise, the flow proceeds to step 208 as there is still excess fuel remaining in the fuel cell. For example, in FIG. 6A, if the power $P_3$ measured at point 503 is smaller than the power $P_4$ measured at point 504, then there is still excess fuel remaining in the fuel cell system and thus step 208 will be proceeded.

At step 208, a third characteristic value of the fuel cell is obtained before the begin of another monitoring period continuing the aforesaid monitoring period; and then the flow proceeds to step 209. In the embodiment of FIG. 6, the third characteristic value shall be obtained before the point 506, that it can be the power $P_5$ measured at point 505. At step 209, a fourth characteristic value of the fuel cell is obtained at the end of the continuing monitoring period; and then the flow proceeds to step 210. In the embodiment of FIG. 6, the fourth characteristic value shall be obtained at the point 506, that it can be the power $P_6$ measured at point 506. At step 210, an evaluation is made to determine whether the variation of the characteristic value exceeds a threshold value; if so, then the flow proceeds to step 204; otherwise, the flow proceeds to step 211. It is noted that the threshold value is defined similar to the foregoing description, and thus in this exemplary embodiment it is defined as 20% so that the characteristic value of FIG. 6 does not exceed 20% and the flow proceeds to step 211. At step 211, an evaluation is made to determine whether the fourth characteristic value is small than the third characteristic value; if so, then the flow proceeds to step 201; otherwise, it indicates that there is still excess fuel remaining in the fuel cell system and thus the flow proceeds to step 208 for continuing the monitoring of whether the excess fuel in the fuel cell system is exhausted. In the embodiment of FIG. 6, as the power $P_6$ is smaller than the power $P_5$, the flow will proceeds back to step 201 for injecting fuel into the fuel cell system. It is noted that the interval between the point 505 and the point 506 is specified to be one second, but is not limit thereby.

As shown in FIG. 5 and FIG. 6A, when fuel is injected into the fuel cell system at $T_6$, a new specific monitoring period $T_{mon3}$ is determined. During the duration of the specific monitoring period $T_{mon3}$, the step 203 is proceeded for determining whether the variation of the characteristic value exceeds the threshold value. In FIG. 6A, in the duration of the specific monitoring period $T_{mon3}$, the variation of characteristic value measured between the point 507 and the point 508 exceeds the threshold value, and thus the flow proceeds to the step 204 for determining whether the characteristic value changes from low to high. As the current $I_8$ is smaller than the current $I_7$ in the specific monitoring period $T_{mon3}$, the characteristic value is changing from high to low and thus the flow proceeds to step 202 for determining another new specific monitoring period $T_{mon4}$. Therefore, the fuel supply of the fuel cell is under constant monitoring and adjustment for sustaining the fuel cell to operate continuously and normally.

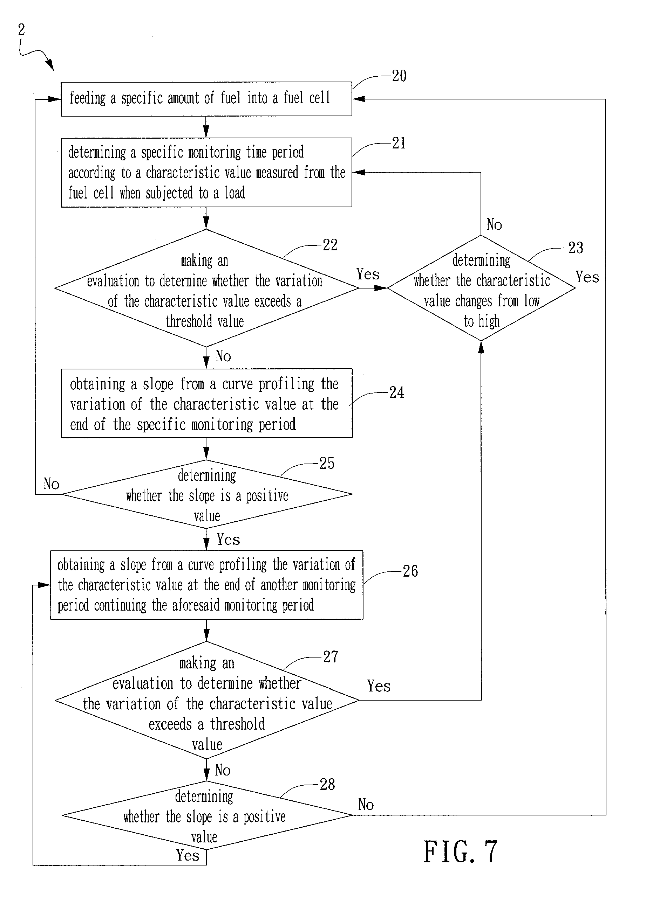

Please refer to FIG. 7, which is a flow chart depicting steps of a method for supplying fuel to a fuel cell according to a third embodiment of the invention. In the step 20 to step 28 included in the third embodiment of FIG. 7, most steps of which are the same as those described in the second embodiment while the only difference is in the step 24 and step 26 that in the third embodiment, the determination of whether the fuel cell has exhausted its fuel is based on an evaluation for determining whether a slope is a positive value or a negative value. At step 24, a first slope is obtained from a curve profiling the variation of the characteristic value at the end of the specific monitoring period; and then the flow proceeds to step 25. At step 25, an evaluation is made determining whether the first slope is a positive value; if so, then the flow proceeds to step 26; otherwise, the flow proceeds back to step 20 for injecting fuel into the fuel cell system. At step 26, a second slope is obtained from the curve profiling the variation of the characteristic value at the end of another monitoring period continuing the aforesaid monitoring period; and then the flow proceeds to step 27. At step 27, an evaluation is made to determine whether the variation of the characteristic value exceeds a threshold value; if so, then the flow proceeds back to step 23; otherwise, the flow proceeds to step 28. At step 28, an evaluation is made for determining whether the second slope is a positive value; if so, then the flow proceeds to step 26; otherwise, the flow proceeds to step 20.

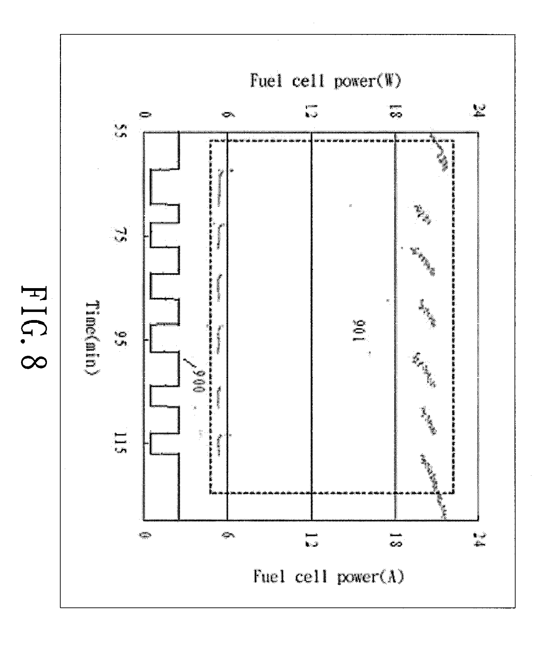

Please refer to FIG. 8, which is a diagram showing the relationship between the load and power of a fuel cell operating under the fuel supplying method of the second embodiment of the invention. Actually, diagram of FIG. 8 illustrates an experimental result of using a DMFC with rated power of 25W to supply power to a notebook. The curve 900 in FIG. 8 represents current variation while subjecting to a load which can be considered as the load variation. The high load 3A represent the notebook is operating and the low load 0.8A represents the notebook is not operating and the DMFC only sustains the operation of its BOP system. The curve plots in the area 901 shows a power curve of the fuel cell under dynamic load. As shown in FIG. 8, the fuel cell operating according to the method of the invention can automatically regulating its fuel supply for providing a minimum power output under dynamic load. In addition, as the load is switching with the on/off of the notebook, the method of the invention not only can satisfy the minimum requirement of power of the load system, but also it can automatically enable toward a maximum power output.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims. For instance, in the step 201, a specific amount of fuel is injected into the fuel cell system that the specific amount is a constant value. Thus, in step 202, the duration of the specific monitoring period can be varied according to different loads. However, except for varying the duration of the monitoring period, it can be control by varying the amount of fuel to be injected into the fuel cell system while maintaining the duration of the monitoring period to be constant. In short, the total capacity of the fuel cell is governed by a function of the amount of fuel injected into the fuel cell system at each supply and the duration of the monitoring period. Therefore, no matter it is performed under constant amount of fuel with varying monitoring period, or under constant monitoring period with varying amount of fuel, both can be considered as modifications of the invention.

Although the foregoing embodiments are illustrated under dynamic load, the method of the invention is not limited thereby in actual applications. For instance, in a fuel cell, it's load can be considered to be varying during the activating and deactivating of fuel cells. However, when the fuel cell system is operating normally and the fuel cell is used as charger, the load is constant. Therefore, the method of the invention can also be adapted for constant load and dynamic load.

To sum up, the fuel supplying method of the invention is capable of regulating fuel concentration and changing fuel supply of a fuel cell according to a load measured from the fuel cell automatically for enabling the fuel cell to generate power in respond to the variation of the load and thus optimize the performance of the fuel cell, which is adapted for all industrial requirements, such as those of automobile industry and 3C industry. The above descriptions are the preferable embodiments of the present invention. The covered scopes of the present invention are not restricted on the embodiments shown in the present invention. All the changes according to the contents of the present invention, the generated functions and characteristics similar to those of the embodiments of the present invention and any ideas thought by the persons well-known such technologies are all within the scopes of the present invention.

**Claims**

1. A method for supplying fuel to fuel cell, comprising the steps of:

   (a) feeding a specific amount of a fuel into a fuel cell;
   (b) determining a specific monitoring period according to a characteristic value measured from the fuel cell when subjected to a load;
   (c) detecting if the load is varying during the specific monitoring period; and
   (d) selecting to proceed to the step (a) or (b) according the variation of the load.

2. The method of claim 1, wherein the characteristic value is selected from the group consisting of current measured from the fuel cell, voltage measured from the fuel cell, power measured from the fuel cell, and the combination thereof.

3. The method of claim 1, wherein the load is considered to be varying when the variation of a characteristic value exceeds a predetermined threshold value at any time during the specific monitoring period; and the characteristic value is selected from the group consisting of current measured from the fuel cell, voltage measured from the fuel cell, power measured from the fuel cell, and the combination thereof.

4. The method of claim 1, wherein the selecting step of step (d) further comprises the steps of:

   (d1) proceeding back to step (a) when the load is increased; and
   (d2) proceeding back to step (b) when the load is decreased;
   wherein the load is determined to be increases when a characteristic value changes from low to high; and the load is determined to be decreases when the characteristic value changes from high to low; and the characteristic value is selected from the group consisting of current measured from the fuel cell, voltage measured from the fuel cell, power measured from the fuel cell, and the combination thereof.

5. The method of claim 4, wherein the changing of the characteristic value is determined by a means selected from the group consisting of: the characteristic value changes from low to high when a slope obtained from a curve profiling the variation of the characteristic value is a positive value; the characteristic value changes from high to low when the slope obtained from the curve profiling the variation of the characteristic value is a negative value; the characteristic value from high to low is determined by evaluating whether the difference of characteristic values measured before a specific point of time and at the specific point of time is positive; and the characteristic value from low to high is determined by evaluating whether the difference of characteristic values measured before a specific point of time and at the specific point of time is negative.

6. A method for supplying fuel to fuel cell, comprising the steps of:

   (a) feeding a specific amount of a fuel into a fuel cell;
   (b) determining a specific monitoring period according to a characteristic value measured from the fuel cell when subjected to a load;
   (c) detecting if the load is varying during the specific monitoring period;
   (d) selecting to proceed to the step (a) or (b) if the load is changed ; and
   (e) determining, if the load is not changed, whether the specific amount of fuel is enough.

**7.** The method of claim 6, wherein the characteristic value is selected from the group consisting of current measured from the fuel cell, voltage measured from the fuel cell, power measured from the fuel cell, and the combination thereof.

**8.** The method of claim 6, wherein the load is considered to be varying when the variation of a characteristic value exceeds a predetermined threshold value at any time during the specific monitoring period; and the characteristic value is selected from the group consisting of current measured from the fuel cell, voltage measured from the fuel cell, power measured from the fuel cell, and the combination thereof.

**9.** The method of claim 6, wherein the selecting step of step (d) further comprises the steps of:

(d1) proceeding back to step (a) when the load is increased; and
(d2) proceeding back to step (b) when the load is decreased;
wherein the load is determined to be increases when a characteristic value changes from low to high; and the load is determined to be decreases when the characteristic value changes from high to low; and the characteristic value is selected from the group consisting of current measured from the fuel cell, voltage measured from the fuel cell, power measured from the fuel cell, and the combination thereof.

**10.** The method of claim 9, wherein the changing of the characteristic value is determined by a means selected from the group consisting of: the characteristic value changes from low to high when a slope obtained from a curve profiling the variation of the characteristic value is a positive value; the characteristic value changes from high to low when the slope obtained from the curve profiling the variation of the characteristic value is a negative value; the characteristic value from high to low is determined by evaluating whether the difference of characteristic values measured before a specific point of time and at the specific point of time is positive; and the characteristic value from low to high is determined by evaluating whether the difference of characteristic values measured before a specific point of time and at the specific point of time is negative.

**11.** The method of claim 6, wherein the fuel sufficiency determination of step (e) further comprises the steps of:

(e1) obtaining a first characteristic value of the fuel cell before the end of the specific monitoring period;
(e2) obtaining a second characteristic value of the fuel cell at the end of the specific monitoring period; and
(e3) making an evaluation to determine whether the second characteristic value is small than the first characteristic value; and if smaller, the flow proceeds back to step (a) for injecting the specific amount of a fuel into the mixing tank of the fuel cell system.

**12.** The method of claim 11, wherein the first characteristic value is a value selected from the group consisting of the minimum voltage measured during the specific monitoring period, the minimum current measured during the specific monitoring period, the minimum power measured during the specific monitoring period, and the combination thereof.

**13.** The method of claim 11, wherein the first characteristic value is a value selected from the group consisting of: an average of characteristic values associated with a time zone in the specific monitoring period; and a root mean squre (RMS) of the characteristic values associated with a time zone in the specific monitoring period.

**14.** The method of claim 11, further comprising the steps of:

(e4) obtaining a third characteristic value of the fuel cell before a specific point of time after the end of the specific monitoring period when the second characteristic value is larger than the first characteristic value;
(e5) obtaining a fourth characteristic value of the fuel cell at the specific point of time;
(e6) making an evaluation to determine whether the variation of the characteristic value exceeds a threshold value; and if so, the flow proceeds back to step (d);
(e7) making an evaluation to determine whether the fourth characteristic value is small than the third characteristic value when the variation of the characteristic value do not exceed the threshold value; and if the fourth characteristic value is small than the third characteristic value, the flow proceeds back to step (a) for injecting the specific amount of fuel into the mixing tank of the fuel cell system; and
(e8) proceeding back to step (e4) when fourth characteristic value is larger than the third characteristic value.

**15.** The method of claim 14, wherein the third characteristic value is a value selected from the group consisting of: an average of characteristic values associated with a time zone before the specific point of time, a root mean square (RMS) of the characteristic values associated with a time zone before the specific point of time, and the minimum of the characteristic value measured from the fuel cell associated with a time zone before the specific point of time.

16. The method of claim 6, wherein the step (e) further comprising the steps of:

(e1) obtaining a first slop from a curve profiling characteristic value of the fuel cell at the end of the specific monitoring period;
(e2) proceeding back to step (a) for injecting the specific amount of fuel into the fuel cell when the first slope is a negative value;
(e3) obtaining a second slope from the characteristic curve of the fuel cell before a specific point time after the end of the monitoring period when the first slope is a positive value;
(e4) making an evaluation to determine whether the variation of the characteristic value exceeds a threshold value; and if so, the flow proceeds back to step (d);
(e5) determining whether the second slope is a negative value when the characteristic value does not exceed the threshold value; and if so, the flow proceeds back to step (a) for injecting the specific amount of fuel into the fuel cell; and
(e6) proceeding back to step (e3) when the second slope is a positive value.

17. The method of claim 6, wherein the fuel is a hydrogen-rich fuel selected from the group consisting of methanol, ethanol, and boron hydride.

**Amended claims in accordance with Rule 137(2) EPC.**

**1.** A method for supplying fuel to fuel cell, comprising the steps of:

(a) feeding a specific amount of a fuel into a fuel cell;
(b) determining a specific monitoring period according to a characteristic value measured from the fuel cell when subjected to a load;
(c) detecting if the load is varying during the specific monitoring period; and
(d) selecting to proceed to the step (a) or (b) according the variation of the load.

**2.** The method of claim 1, wherein the characteristic value is selected from the group consisting of current measured from the fuel cell, voltage measured from the fuel cell, power measured from the fuel cell, and the combination thereof.

**3.** The method of claim 1, wherein the load is considered to be varying when the variation of a characteristic value exceeds a predetermined threshold value at any time during the specific monitoring period; and the characteristic value is selected from the group consisting of current measured from the fuel cell, voltage measured from the fuel cell, power measured from the fuel cell, and the combination thereof.

**4.** The method of claim 1, wherein the selecting step of step (d) further comprises the steps of:

(d1 proceeding back to step (a) when the load is increased; and
(d2) proceeding back to step (b) when the load is decreased;
wherein the load is determined to be increases when a characteristic value changes from low to high; and the load is determined to be decreases when the characteristic value changes from high to low; and the characteristic value is selected from the group consisting of current measured from the fuel cell, voltage measured from the fuel cell, power measured from the fuel cell, and the combination thereof.

**5.** The method of claim 4, wherein the changing of the characteristic value is determined by a means selected from the group consisting of: the characteristic value changes from low to high when a slope obtained from a curve profiling the variation of the characteristic value is a positive value; the characteristic value changes from high to low when the slope obtained from the curve profiling the variation of the characteristic value is a negative value; the characteristic value from high to low is determined by evaluating whether the difference of characteristic values measured before a specific point of time and at the specific point of time is positive; and the characteristic value from low to high is determined by evaluating whether the difference of characteristic values measured before a specific point of time and at the specific point of time is negative.

**6.** The method of claim 1, further comprising a step (e) determining, if the load is not changed, whether the specific amount of fuel is enough.

**7.** The method of claim 6, wherein the characteristic value is selected from the group consisting of current measured from the fuel cell, voltage measured from the fuel cell, power measured from the fuel cell, and the combination thereof.

**8.** The method of claim 6, wherein the load is considered to be varying when the variation of a characteristic value exceeds a predetermined threshold value at any time during the specific monitoring period; and the characteristic value is selected from the group consisting of current measured from the fuel cell, voltage measured from the fuel cell, power measured from the fuel cell, and the combination thereof.

**9.** The method of claim 6, wherein the selecting step of step (d) further comprises the steps of:

> (d1) proceeding back to step (a) when the load is increased; and
> (d2) proceeding back to step (b) when the load is decreased;
> wherein the load is determined to be increases when a characteristic value changes from low to high; and the load is determined to be decreases when the characteristic value changes from high to low; and the characteristic value is selected from the group consisting of current measured from the fuel cell, voltage measured from the fuel cell, power measured from the fuel cell, and the combination thereof.

**10.** The method of claim 9, wherein the changing of the characteristic value is determined by a means selected from the group consisting of: the characteristic value changes from low to high when a slope obtained from a curve profiling the variation of the characteristic value is a positive value; the characteristic value changes from high to low when the slope obtained from the curve profiling the variation of the characteristic value is a negative value; the characteristic value from high to low is determined by evaluating whether the difference of characteristic values measured before a specific point of time and at the specific point of time is positive; and the characteristic value from low to high is determined by evaluating whether the difference of characteristic values measured before a specific point of time and at the specific point of time is negative.

**11.** The method of claim 6, wherein the fuel sufficiency determination of step

> (e) further comprises the steps of:

>> (e1) obtaining a first characteristic value of the fuel cell before the end of the specific monitoring period;
>> (e2) obtaining a second characteristic value of the fuel cell at the end of the specific monitoring period; and
>> (e3) making an evaluation to determine whether the second characteristic value is small than the first characteristic value; and if smaller, the flow proceeds back to step (a) for injecting the specific amount of a fuel into the mixing tank of the fuel cell system.

**12.** The method of claim 11, wherein the first characteristic value is a value selected from the group consisting of the minimum voltage measured during the specific monitoring period, the minimum current measured during the specific monitoring period, the minimum power measured during the specific monitoring period, and the combination thereof.

**13.** The method of claim 11, wherein the first characteristic value is a value selected from the group consisting of: an average of characteristic values associated with a time zone in the specific monitoring period; and a root mean squre (RMS) of the characteristic values associated with a time zone in the specific monitoring period.

**14.** The method of claim 11, further comprising the steps of:

> (e4) obtaining a third characteristic value of the fuel cell before a specific point of time after the end of the specific monitoring period when the second characteristic value is larger than the first characteristic value;
> (e5) obtaining a fourth characteristic value of the fuel cell at the specific point of time;
> (e6) making an evaluation to determine whether the variation of the characteristic value exceeds a threshold value; and if so, the flow proceeds back to step (d);
> (e7) making an evaluation to determine whether the fourth characteristic value is small than the third characteristic value when the variation of the characteristic value do not exceed the threshold value; and if the fourth characteristic value is small than the third characteristic value, the flow proceeds back to step (a) for injecting the specific amount of fuel into the mixing tank of the fuel cell system; and
> (e8) proceeding back to step (e4) when fourth characteristic value is larger than the third characteristic value.

**15.** The method of claim 14, wherein the third characteristic value is a value selected from the group consisting of: an average of characteristic values associated with a time zone before the specific point of time, a root mean square (RMS) of the characteristic values associated with a time zone before the specific point of time, and the minimum of the characteristic value measured from the fuel cell associated with a time zone before the specific point of time.

**16.** The method of claim 6, wherein the step (e) further comprising the steps of:

> (e1) obtaining a first slop from a curve profiling characteristic value of the fuel cell at the end of the specific monitoring period;

(e2) proceeding back to step (a) for injecting the specific amount of fuel into the fuel cell when the first slope is a negative value;

(e3) obtaining a second slope from the characteristic curve of the fuel cell before a specific point time after the end of the monitoring period when the first slope is a positive value;

(e4) making an evaluation to determine whether the variation of the characteristic value exceeds a threshold value; and if so, the flow proceeds back to step (d);

(e5) determining whether the second slope is a negative value when the characteristic value does not exceed the threshold value; and if so, the flow proceeds back to step (a) for injecting the specific amount of fuel into the fuel cell; and

(e6) proceeding back to step (e3) when the second slope is a positive value.

**17.** The method of claim 6, wherein the fuel is a hydrogen-rich fuel selected from the group consisting of methanol, ethanol, and boron hydride.

EP 2 045 863 A1

1

```
10 ──┐  ┌─────────────────────────┐
     └─▶│ feeding a specific amount of │◀──────────────┐
        │ fuel into a fuel cell       │                │
        └─────────────────────────┘                │
                    │                               │
                    ▼                               │
        ┌─────────────────────────┐                │
11 ─────┤ determining a specific   │◀──────────┐    │
        │ monitoring period according│          │    │
        │ to a characteristic value │          │    │
        │ measured from the fuel cell│          │    │
        │ when subjected to a load  │          │    │
        └─────────────────────────┘  decreasing│    │
                    │                           │    │
                    ▼                           │    │ increasing
              detecting if      Yes    determining
12 ─── the load is varying during ───▶ whether the load is changed ─13
          the specific monitoring      from low to high or
                 period                   otherwise
                    │ No
                    ▼
        ┌─────────────────────────┐
14 ─────┤ determining, in the specific│
        │ monitoring period, whether │        FIG. 1
        │ the specific amount of fuel is│
        │ enough                      │
        └─────────────────────────┘
```

FIG. 1

FIG. 2

**FIG. 3**

Fuel injection

302

$I_2$

Current

$I_1$

301

$\Delta I / I_1 * 100\% > 20\%$

$I_0$

$T_1$   $T_2$

Tmon1

Tmon2

Time

## FIG. 4A

401

$\Delta I / I_1 * 100\% < -20\%$

$I_1$

402

Current

$I_2$   $I_2$

$T_1$   $T_2$

$I_0$

Tmon1

Tmon2

Time

## FIG. 4B

2

feeding a specific amount of a fuel into a fuel cell ────201

determining a specific monitoring time period ────202
according to a characteristic value measured
from the fuel cell when subjected to a load

No

making an ────203
evaluation to determine whether
the variation of the characteristic value
exceeds a threshold value    Yes

determining ────204
whether the characteristic    Yes
value changes from low
to high

No

obtaining a first characteristic value of the fuel cell ────205
before the end of the specific monitoring period

obtaining a second characteristic value of the fuel ────206
cell at the end of the specific monitoring period

making an ────207
Yes    evaluation to determine whether the
second characteristic value is small than the first
characteristic value

No

obtaining a third characteristic value of the fuel ────208
cell before the end of another monitoring period
continuing the aforesaid monitoring period

obtaining a fourth characteristic value of the fuel cell ────209
at the end of the continuing monitoring period

making an ────210
evaluation to determine whether the variation
of the characteristic value exceeds a    Yes
threshold value

No

making an ────211
evaluation to determine whether the
fourth characteristic value is small than the third    Yes
characteristic value

No

FIG. 5

FIG. 6A

FIG. 6B

2

feeding a specific amount of fuel into a fuel cell ──20

determining a specific monitoring time period according to a characteristic value measured from the fuel cell when subjected to a load ──21

making an evaluation to determine whether the variation of the characteristic value exceeds a threshold value ──22

Yes →

determining whether the characteristic value changes from low to high ──23

No ↑

Yes →

No ↓

obtaining a slope from a curve profiling the variation of the characteristic value at the end of the specific monitoring period ──24

determining whether the slope is a positive value ──25

No →

Yes ↓

obtaining a slope from a curve profiling the variation of the characteristic value at the end of another monitoring period continuing the aforesaid monitoring period ──26

making an evaluation to determine whether the variation of the characteristic value exceeds a threshold value ──27

Yes →

No ↓

determining whether the slope is a positive value ──28

No →

Yes

FIG. 7

FIG. 8

**European Patent Office**

## EUROPEAN SEARCH REPORT

Application Number

EP 07 11 7945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN ET AL: "Portable DMFC system with methanol sensor-less control" JOURNAL OF POWER SOURCES, ELSEVIER, AMSTERDAM, NL, vol. 167, no. 2, 17 April 2007 (2007-04-17), pages 442-449, XP022032224 ISSN: 0378-7753 * page 4, right-hand column, paragraph 1; figure 5 * * the whole document * | 1-17 | INV. H01M8/04 ADD. H01M8/10 |
| A | US 2006/216557 A1 (MIYAMOTO HIROHISA [JP] ET AL) 28 September 2006 (2006-09-28) * paragraphs [0037] - [0039] * | 1-17 | |
| A | US 2007/072023 A1 (NAKAMURA KOJI [JP] ET AL) 29 March 2007 (2007-03-29) * paragraph [0013] * | 1-17 | |

TECHNICAL FIELDS SEARCHED (IPC)

H01M

The present search report has been drawn up for all claims

| Place of search | Date of completion of the search | Examiner |
|---|---|---|
| The Hague | 12 December 2007 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 7945

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2007

| Patent document cited in search report | Publication date | Patent family member(s) | Publication date |
|---|---|---|---|
| US 2006216557 A1 | 28-09-2006 | JP 2006269262 A | 05-10-2006 |
| US 2007072023 A1 | 29-03-2007 | CN 1957493 A | 02-05-2007 |
| | | JP 2005294065 A | 20-10-2005 |
| | | WO 2005099007 A1 | 20-10-2005 |

EPO FORM P0459

For more details about this annex : see Official Journal of the European Patent Office, No. 12/82

**EP 2 045 863 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6698278 B
- US 6991865 B